# EUROPÄISCHE PATENTANMELDUNG

(11) **EP 2 071 207 A2**
(43) Veröffentlichungstag der Anmeldung: **17.06.2009**
(21) Anmeldenummer: 08170430.6
(22) Anmeldetag: 02.12.2008
(51) Int. Cl.: F16D 48/06

(54) **Kupplungssteuerungsverfahren einer automatisierten Kupplung**

(30) Priorität: 13.12.2007 DE 102007055793
(71) Anmelder: ZF Friedrichshafen AG, 88038 Friedrichshafen (DE)
(72) Erfinder: Schneider, Florian, 88161 Lindenberg (DE); Mair, Roland, 88069 Tettnang-Laimnau (DE)

(57) **Zusammenfassung**

Die Erfindung beinhaltet ein Kupplungssteuerungsverfahren einer automatisierten Kupplung (8) in einem Antriebsstrang eines Kraftfahrzeugs, wobei die automatisierte Kupplung (8) in einem "Normalmodus" in unterschiedlichen Betriebsarten angesteuert werden kann. Erfindungsgemäß kann die automatisierte Kupplung (8) zusätzlich zu dem "Normalmodus" auch in einem "Ruckmodus" angesteuert werden, wobei die automatisierte Kupplung bei aktiviertem "Ruckmodus" derart angesteuert wird, dass zumindest eine Ruckbewegung des Kraftfahrzeugs (2) erzwungen wird.

## Beschreibung

Die Erfindung betrifft ein Kupplungssteuerungsverfahren einer automatisierten Kupplung in einem Antriebsstrang eines Kraftfahrzeugs nach der im Oberbegriff von Anspruch 1 näher definierten Art.

Kraftfahrzeuge werden zunehmend mit automatisierten Kupplungen ausgerüstet, durch deren Verwendung der Fahrer beim Anfahren und bei Schaltvorgängen von der Durchführung des koordinierten Ein- und Ausrückens der Kupplung befreit ist und sich auf andere Aufgaben konzentrieren kann. Neben einer Erhöhung des Fahrkomforts kann durch die Verwendung einer automatisierten Kupplung, insbesondere in Verbindung mit einem automatisierten Schaltgetriebe, auch eine Reduzierung des Kraftstoffverbrauchs und der Schadstoffemissionen eines Kraftfahrzeugs erzielt werden.

Aus der Fahrzeugtechnik sind Verfahren zur Steuerung einer automatisierten Kupplung, die in einem Antriebsstrang eines Kraftfahrzeugs im Kraftfluss zwischen einer als Verbrennungsmotor ausgebildeten Antriebseinheit und einem Fahrzeuggetriebe angeordnet ist, bekannt, bei denen die automatisierte Kupplung derart angesteuert wird, dass für die Fahrzeuginsassen ein möglichst großer Fahrkomfort realisiert wird. Um das Fahrverhalten des Kraftfahrzeugs besonders komfortabel zu gestalten, insbesondere bei einem Anfahrvorgang, wird die Kupplung beispielsweise derart angesteuert, dass sich die Fahrzeuglängsbeschleunigung lediglich mit geringen Gradienten ändert.

In der DE 10 2004 027 575 B3 wird ein Verfahren zur Steuerung einer automatisierten Kupplung offenbart, welches insbesondere für die Steuerung eines Anfahrvorganges bzw. für eine besonders komfortable Steuerung der Kupplung bei Langsamfahrten in niedrigen Gangstufen geeignet ist.

Die EP 0 601 729 B1 offenbart ein Steuerungsverfahren einer Brennkraftmaschine mit einer automatischen Kupplung. Eine Kupplungssteuereinrichtung weist vier automatische Betriebsarten und eine nichtautomatische Betriebsart auf. Die letztere ist eine automatische Aus-Betriebsart und veranlasst die Kupplung vollständig auszurücken. Zu den automatischen Betriebsarten gehört eine Berührpunkt-Annäherungsbetriebsart, die der Kupplung befiehlt, bis zu einem Berührpunkt zu schließen, eine Kriechbetriebsart, die die Kupplung bei wenig ausgelenkten Fahrpedalpositionen in einer schlupfenden Betriebsart hält, eine Anfahrbetriebsart, die ein kontrolliertes Einkuppeln der Kupplung in Abhängigkeit von einer Fahrpedalposition befiehlt, und eine Überbrückungsbetriebsart, die ein vollständiges Einrücken der Kupplung befiehlt.

Auch bei Nutzkraftfahrzeugen, wie beispielsweise Lastkraftwagen oder Baustellenfahrzeuge, ist insbesondere bei einem Anfahrvorgang eine besonders sanfte Betätigung der automatisierten Kupplung erwünscht. Jedoch gibt es Situationen, bei denen eine sanfte Betätigung der automatisierten Kupplung in einem Nutzkraftfahrzeug unvorteilhaft ist. Wenn beispielsweise ein Fahrzeugführer das Ladegut eines Kipper-Fahrzeugs abkippen möchte, kann es vorkommen, dass das Ladegut nur schlecht von der Ladefläche rutscht. Bei einem Kraftfahrzeug mit manuell betätigter Kupplung würde der Fahrzeugführer die Kupplung derart betätigen, dass das Kraftfahrzeug eine Ruckbewegung erfährt, wodurch das Ladegut von der Ladefläche abrutscht.

Der vorliegenden Erfindung liegt die Aufgabe zugrunde, ein Kupplungssteuerungsverfahren einer automatisierten Kupplung in einem Antriebsstrang eines Kraftfahrzeugs darzustellen, durch welches die automatisierte Kupplung situationsabhängig in unterschiedlichen Betriebsmodi angesteuert werden kann und durch welches die Nachteile des Standes der Technik minimiert bzw. beseitigt werden.

Die der Erfindung zugrunde liegende Aufgabe wird durch ein, auch die kennzeichnenden Merkmale des Hauptanspruchs aufweisendes, gattungsgemäßes Kupplungssteuerungsverfahren einer automatisierten Kupplung in einem Antriebsstrang eines Kraftfahrzeugs gelöst.

Die Erfindung geht aus von einem Kupplungssteuerungsverfahren einer automatisierten Kupplung in einem Antriebsstrang eines Kraftfahrzeugs, insbesondere eines Nutzkraftfahrzeugs, wie beispielsweise Lastkraftwagen oder Baustellenfahrzeuge. Die automatisierte Kupplung, die beispielsweise als trockene Reibungskupplung ausgebildet ist und in dem Antriebsstrang des Kraftfahrzeugs im Kraftfluss zwischen einer als Verbrennungsmotor ausgebildeten Antriebseinheit und einem Fahrzeuggetriebe angeordnet ist, kann in einem "Normalmodus" in unterschiedlichen Betriebsarten angesteuert werden. Beispielsweise kann die automatisierte Kupplung in dem "Normalmodus" in einer Kriechbetriebsart, bei der die Kupplung in einem Schlupfbetrieb gehalten wird, oder in einer Anfahrbetriebsart, bei der ein kontrolliertes Einkuppeln in Abhängigkeit einer Fahr- bzw. Gaspedalposition erfolgt, angesteuert werden. Bei einer Ansteuerung der Kupplung in dem "Normalmodus" wird die Kupplung derart angesteuert, dass dem Fahrzeugführer ein komfortables und ruckfreies Fahrverhalten des Kraftfahrzeugs vermittelt wird.

Erfindungsgemäß ist vorgesehen, dass die automatisierte Kupplung zusätzlich zu dem "Normalmodus" auch in einem "Ruckmodus" angesteuert werden kann. Bei aktiviertem "Ruckmodus" wird die automatisierte Kupplung derart angesteuert, dass zumindest eine Ruckbewegung des Kraftfahrzeugs erzwungen wird.

Die automatisierte Kupplung wird standardmäßig in dem "Normalmodus" angesteuert, derart, dass bei einem "Normalfahrbetrieb" des Kraftfahrzeugs ein besonders komfortables Fahrverhalten realisiert wird, insbesondere ein ruckfreies Anfahren des Kraftfahrzeugs ermöglicht wird.

In einer vorteilhaften Ausgestaltung des erfindungsgemäßen Kupplungssteuerungsverfahrens wird der "Ruckmodus" automatisch aktiviert bzw. deaktiviert, wenn entsprechende Fahrzeugzustandsinformationen vorliegen, die ein Aktivieren bzw. Deaktivieren des "Ruckmodus" bewirken.

Eine Fahrzeugzustandsinformation, die ein Aktivieren des "Ruckmodus" bewirkt, kann beispielsweise vorliegen, wenn innerhalb einer vorbestimmten Zeit durch den Fahrzeugführer eine gewisse Anzahl an Anfahrvorgängen begonnen und wieder abgebrochen wurde. Beispielsweise kann hierfür die Position eines Fahr- bzw. Gaspedals erfasst und/oder ausgewertet werden, da ein Anfahrwunsch vom Fahrzeugführer durch die Betätigung des Fahr- bzw. Gaspedals signalisiert wird. Somit kann durch ein wiederholtes kurzzeitiges Betätigen und Lösen des Fahr- bzw. Gaspedals durch den Fahrzeugführer der "Ruckmodus" automatisch aktiviert werden, beispielsweise nach dreimaligem Betätigen und Lösen des Fahr- bzw. Gaspedals.

Eine Fahrzeugzustandsinformation, die ein Deaktivieren des "Ruckmodus" bewirkt, kann beispielsweise vorliegen, wenn das Kraftfahrzeug eine vorgegebene Geschwindigkeit erreicht bzw. überschreitet und/oder eine vorgegebene Wegstrecke zurückgelegt hat. Das Erreichen einer bestimmten Geschwindigkeit bzw. das Zurücklegen einer bestimmten Wegstrecke kann über entsprechende Sensoren festgestellt werden und beispielsweise in einer Kupplungssteuerungseinheit als Information gedeutet werden, dass das Kraftfahrzeug wieder in dem "Normalmodus" betrieben werden soll.

In einer bevorzugten Ausgestaltung des erfindungsgemäßen Kupplungssteuerungsverfahrens ist zur Aktivierung bzw. Deaktivierung des "Ruckmodus" ein Bedienelement vorgesehen, welches manuell betätigt wird. Das Bedienelement zur Auswahl des "Normalmodus" bzw. des "Ruckmodus" kann beispielsweise als Dreh- oder Kippschalter ausgebildet sein und eine erste Stellung, in der der "Normalmodus" aktiviert ist sowie eine zweite Stellung, in der der "Ruckmodus" aktiviert ist, aufweisen. Das Bedienelement kann mit Verbindungsleitungen mit einer Steuereinrichtung des Kraftfahrzeugs in Verbindung stehen, beispielsweise mit der Kupplungssteuerungseinheit. Ein solcher Dreh- bzw. Kippschalter kann beispielsweise an einem Fahrschalter des Kraftfahrzeugs angeordnet sein, welcher zur Abgabe von manuellen Eingriffen des Fahrzeugführers vorgesehen und mit der Steuereinrichtung des Kraftfahrzeugs verbunden ist.

In einer besonders bevorzugten Ausführungsform des erfindungsgemäßen Kupplungssteuerungsverfahrens wird bei aktiviertem "Ruckmodus" die automatisierte Kupplung derart angesteuert, dass im Vergleich zur Ansteuerung der Kupplung im "Normalmodus" ein durch die automatisierte Kupplung übertragenes Kupplungsmoment innerhalb kurzer Zeit signifikant erhöht wird, derart, dass das Kraftfahrzeug eine kurze Ruckbewegung ausführt.

Bei aktiviertem "Ruckmodus" kann die automatisierte Kupplung beispielsweise derart angesteuert werden, dass das Kupplungsmoment auf einen fest vorgegebenen Wert oder auf einen Wert, welcher von der Fahrzeugmasse und/oder von der Fahrbahn- bzw. Untergrundneigung (Steigung bzw. Gefälle) abhängig ist, erhöht wird.

In einer weiteren Ausführungsform des erfindungsgemäßen Kupplungssteuerungsverfahrens wird bei aktiviertem "Ruckmodus" unmittelbar nach dem Erhöhen des Kupplungsmoments eine Betriebsbremse des Kraftfahrzeugs aktiviert, wodurch die im "Ruckmodus" zurückgelegte Fahrstrecke minimal gehalten wird.

Die automatisierte Kupplung kann bei aktiviertem "Ruckmodus" derart angesteuert werden, dass lediglich eine Ruckbewegung des Kraftfahrzeugs erzwungen wird. In einer weiteren vorteilhaften Ausführungsform kann die automatisierte Kupplung derart angesteuert werden, dass bei aktiviertem "Ruckmodus" mehrere Ruckbewegungen des Kraftfahrzeugs erzwungen werden. Hierbei kann das von der automatisierten Kupplung übertragene Kupplungsmoment mehrmals nacheinander innerhalb kurzer Zeit signifikant erhöht und wieder abgesenkt werden. Beispielsweise kann das Bedienelement zur Auswahl des "Normalmodus" bzw. des "Ruckmodus" hierfür neben einer ersten Stellung, in der der "Normalmodus" aktiviert ist, eine zweite und eine dritte Stellung aufweisen, in denen der "Ruckmodus" aktiviert ist. In der zweiten Stellung, kann die automatisierte Kupplung derart angesteuert werden, dass lediglich eine Ruckbewegung des Kraftfahrzeugs erzwungen wird, während in der dritten Stellung die automatisierte Kupplung derart angesteuert wird, dass mehrere Ruckbewegungen des Kraftfahrzeugs erzwungen werden, beispielsweise drei oder fünf.

Das zuvor beschriebene erfindungsgemäße Kupplungssteuerungsverfahren kann in unterschiedlichen Situationen sinnvoll angewandt werden. Beispielsweise kann bei einem Kipper-Fahrzeug mit automatisierter Kupplung die Kupplung in dem "Ruckmodus" angesteuert werden, wenn ein Ladegut nicht vollständig von einer Ladefläche abrutscht. Durch die im "Ruckmodus" erzeugte Ruckbewegung des Kipper-Fahrzeugs rutscht zumindest noch ein Großteil des restlichen Ladeguts von der Ladefläche ab. Eine weitere Situation, bei der der "Ruckmodus" sinnvoll angewendet werden kann ist, wenn sich eine Anhängerkupplung, beispielsweise eine sogenannte "Maulkupplung", also eine Kupplung mit Fangmaul, eines Kraftfahrzeugs, insbesondere eines Lastkraftwagens, beim Abhängen eines Anhängers nicht löst. Durch die durch den "Ruckmodus" erzwungene Ruckbewegung des Lastkraftwagens kann das Fangmaul von dem entsprechenden Gegenstück der Anhängerdeichsel einfacher gelöst werden.

Im Folgenden wird das Grundprinzip der Erfindung, welche mehrere Ausführungsformen zulässt, an Hand einer Zeichnung beispielhaft näher erläutert.

### Es zeigen:

- Fig. 1: schematisch ein Kraftfahrzeug mit automatisiertem Getriebe und automatisierter Kupplung und
- Fig. 2: ein Kipper-Fahrzeug.

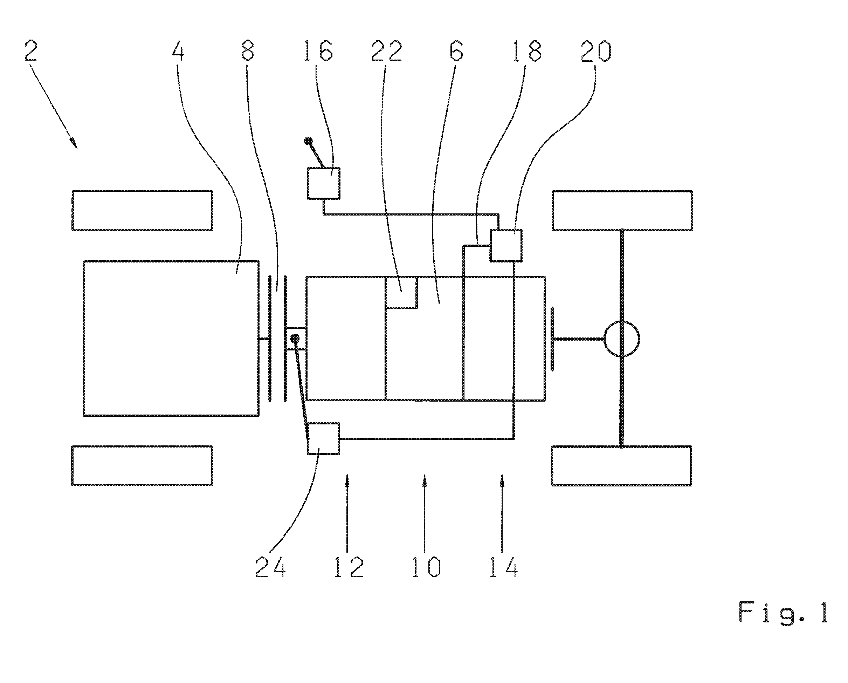

Die Fig. 1 zeigt ein Kraftfahrzeug 2 mit einer Antriebsmaschine 4, einem Getriebe 6 und einer dazwischen angeordneten automatisierten Kupplung 8. Das Getriebe 6 weist einen Hauptgetriebeteil 10, ein Splitgruppengetriebe 12 und ein Bereichsgruppengetriebe 14 auf. Das Getriebe 6 ist über Verbindungsleitungen 18 mit einer elektronischen Steuereinrichtung 20 verbunden. Ein Fahrschalter 16 ist zum Abgabe von manuellen Eingriffen des Fahrzeugsführers vorgesehen und mit der Steuereinrichtung 20 verbunden. Das Getriebe 6 wird von einer Stelleinrichtung 22 automatisch geschaltet nach Signalen, die die Stelleinrichtung 22 von der Steuereinrichtung 20 erhält. Ebenfalls erhält ein Kupplungssteller 24 Signale von der Steuereinrichtung 20 und betätigt die Kupplung 8 automatisch.

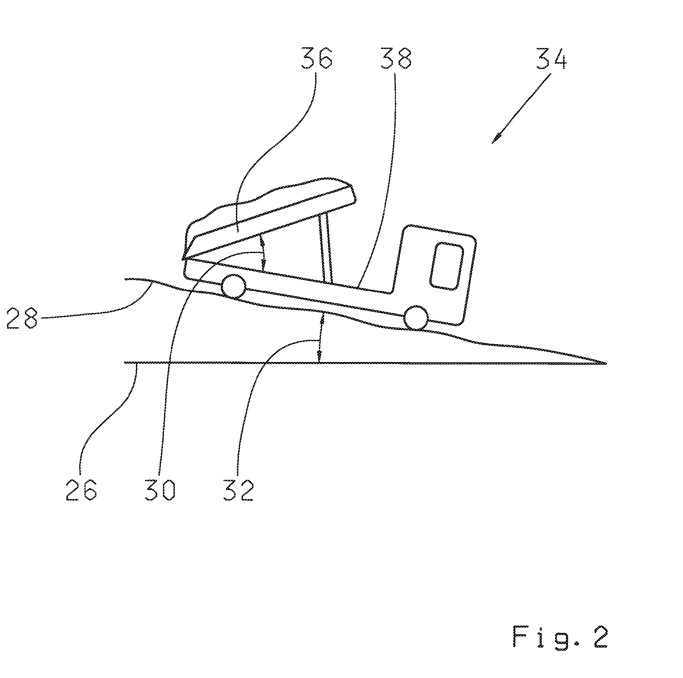

Die Fig. 2 zeigt ein Kipper-Fahrzeug 34, bei welchem eine zwischen einer Antriebsmaschine und einem Getriebe angeordnete automatisierte Kupplung (hier nicht dargestellt) mit dem erfindungsgemäßen Kupplungssteuerungsverfahren angesteuert werden kann. Die automatisierte Kupplung des Kipper-Fahrzeugs 34 kann gemäß der Erfindung sowohl in dem "Normalmodus" als auch in dem "Ruckmodus" angesteuert werden. Da jedoch auch bei Nutzkraftfahrzeugen mit automatisierter Kupplung und gegebenenfalls automatisiertem Getriebe im Normalbetrieb üblicherweise hohe Ansprüche bezüglich des Komforts bestehen, darf der "Ruckmodus" nur aktiviert werden, wenn eine erzwungene Ruckbewegung des Kipper-Fahrzeugs 34 erwünscht ist. Insbesondere bei einem Anfahrvorgang ist eine besonders sanfte Betätigung der automatisierten Kupplung erwünscht, um eine Ruckbewegung des Kipper-Fahrzeugs 34 beim Anfahren zu vermeiden. Somit wird bei einem normalen Anfahrvorgang die automatisierte Kupplung in dem "Normalmodus" angesteuert.

Wenn der Fahrzeugführer das Ladegut des Kipper-Fahrzeugs 34 abkippen möchte, kann es vorkommen, dass das Ladegut nur schlecht oder nicht vollständig von der Ladefläche 36 abrutscht. In der Fig. 2 befindet sich das Kipper-Fahrzeug 34 in einem Gefälle, welches hier durch einen Winkel 32 zwischen einer Horizontalen 26 und einer Fahrbahn 28 dargestellt ist. Somit wird hier ein Kippwinkel 30 gegenüber der Horizontalen 26 um den Winkel 32 reduziert, wodurch das Abkippen des Ladeguts zusätzlich erschwert wird. Unter dem Kippwinkel 30 wird hier der Winkel zwischen einem Fahrgestell 38 und der Ladefläche 36 des Kipper-Fahrzeugs 34 verstanden. Um das Ladegut dennoch zum Rutschen zu bringen, sind bei gekippter Ladefläche 36 Anfahrten durchzuführen, bei denen die automatisierte Kupplung nicht gemäß den sonst geltenden Ansprüchen bezüglich des Komforts angesteuert wird. Vielmehr ist die automatisierte Kupplung derart anzusteuern, dass ein Rucken des Kipper-Fahrzeugs 34 erzwungen wird, wodurch das Ladegut von der Ladefläche 36 abrutscht. Eine derartige Ansteuerung der automatisierten Kupplung erfolgt, wenn das Kipper-Fahrzeug 34 in dem "Ruckmodus" betrieben wird.

Bei dem Kipper-Fahrzeug 34 ist es denkbar, dass ein Aktivieren des "Ruckmodus" in Abhängigkeit von der Position der Ladefläche 36 erfolgt. So kann der "Ruckmodus" aktiviert werden, wenn der Kippwinkel 30 der Ladefläche 36 einen bestimmten Wert erreicht bzw. überschreitet. Beispielsweise kann der "Ruckmodus" aktiviert werden, wenn der Kippwinkel 30 einen Wert von 45 Grad überschreitet und wieder deaktiviert werden, wenn der Kippwinkel 30 den Wert von 45 Grad wieder unterschreitet.

Ist an der Hinterachse des Kipper-Fahrzeugs 34 zumindest ein Sensor angeordnet, mittels dessen das Gewicht auf der Hinterachse des Kipper-Fahrzeugs 34 sensiert bzw. bestimmt werden kann, so kann dieses Signal verwendet werden, um den "Ruckmodus" zu aktivieren. Durch das Erfassen der Hinterachslast kann erkannt werden, ob sich noch Ladegut auf der Ladefläche 36 befindet. Wird beispielsweise bei einem vorgegebenen Kippwinkel 30 erkannt, dass die Ladefläche 36 nicht leer ist, dann wird die automatisierte Kupplung des Kipper-Fahrzeugs 34 in dem "Ruckmodus" angesteuert. Der "Ruckmodus" kann dann wieder deaktiviert werden, wenn durch den Sensor erkannt wird, dass die Ladefläche 36 zumindest annähernd leer ist.

Ebenso kann der "Ruckmodus" aktiviert bzw. deaktiviert werden, wenn ein Nebenabtrieb zur Betätigung der Ladefläche 36 angesteuert wird, wobei hier beispielsweise die Betätigungsdauer des Nebenabtriebs zur Aktivierung und/oder Deaktivierung des "Ruckmodus" berücksichtigt werden kann.

Die automatisierte Kupplung kann bei aktiviertem "Ruckmodus" vorteilhafterweise derart angesteuert werden, dass mehrere Ruckbewegungen des Kraftfahrzeugs erzwungen werden, wodurch ein besseres bzw. vollständigeres Abrutschen des Ladeguts von der Ladefläche 36 erreicht wird.

Da die Ladung häufig recht genau platziert werden muss, darf das Kipper-Fahrzeug 34 bei aktiviertem "Ruckmodus" keine nennenswerte Wegstrecke zurücklegen. Dies bedeutet, dass die Kupplung zwar das entsprechende Kupplungsmoment übertragen muss, die Zeit bei der das Kupplungsmoment anliegt muss jedoch so kurz sein, dass das Kipper-Fahrzeug 34 eine möglichst geringe Wegstrecke zurücklegt. Es ist denkbar, dass bei aktiviertem "Ruckmodus" unmittelbar nach dem Erhöhen des Kupplungsmoments eine Betriebsbremse des Kraftfahrzeugs aktiviert wird, wodurch die im "Ruckmodus" zurückgelegte Fahrstrecke minimal gehalten wird.

### Bezugszeichen

- 2: Kraftfahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Fahrschalter
- 18: Verbindungsleitung
- 20: Steuereinrichtung
- 22: Stelleinrichtung
- 24: Kupplungssteller
- 26: Horizontale
- 28: Fahrbahn
- 30: Kippwinkel
- 32: Winkel zwischen Horizontale und Fahrbahn (Gefälle bzw. Steigung)
- 34: Kipper-Fahrzeug
- 36: Ladefläche
- 38: Fahrgestell

## Patentansprüche

1. Kupplungssteuerungsverfahren einer automatisierten Kupplung in einem Antriebsstrang eines Kraftfahrzeugs, wobei die automatisierte Kupplung in einem "Normalmodus" in unterschiedlichen Betriebsarten angesteuert werden kann, **dadurch gekennzeichnet, dass** die automatisierte Kupplung zusätzlich zu dem "Normalmodus" auch in einem "Ruckmodus" angesteuert werden kann, wobei die automatisierte Kupplung bei aktiviertem "Ruckmodus" derart angesteuert wird, dass zumindest eine Ruckbewegung des Kraftfahrzeugs erzwungen wird.

2. Kupplungssteuerungsverfahren nach Anspruch 1, **dadurch gekennzeichnet, dass** der "Ruckmodus" automatisch aktiviert bzw. deaktiviert wird, wenn entsprechende Fahrzeugzustandsinformationen vorliegen, die ein Aktivieren bzw. Deaktivieren des "Ruckmodus" bewirken.

3. Kupplungssteuerungsverfahren nach Anspruch 1 oder 2, **dadurch gekennzeichnet, dass** der "Ruckmodus" aktiviert wird, wenn innerhalb einer vorbestimmten Zeit durch den Fahrzeugführer eine gewisse Anzahl an Anfahrvorgängen begonnen und wieder abgebrochen wurde.

4. Kupplungssteuerungsverfahren nach wenigstens einem der Ansprüche 1 bis 3, **dadurch gekennzeichnet, dass** der "Ruckmodus" deaktiviert wird, wenn das Kraftfahrzeug eine vorgegebene Geschwindigkeit erreicht bzw. überschreitet und/oder eine vorgegebene Wegstrecke zurückgelegt hat.

5. Kupplungssteuerungsverfahren nach Anspruch 1, **dadurch gekennzeichnet, dass** zur Aktivierung bzw. Deaktivierung des "Ruckmodus" ein Bedienelement manuell betätigt wird.

6. Kupplungssteuerungsverfahren nach wenigstens einem der Ansprüche 1 bis 5, **dadurch gekennzeichnet, dass** bei aktiviertem "Ruckmodus" die automatisierte Kupplung derart angesteuert wird, dass ein durch die automatisierte Kupplung übertragenes Kupplungsmoment innerhalb kurzer Zeit signifikant erhöht wird.

7. Kupplungssteuerungsverfahren nach wenigstens einem der vorangegangenen Ansprüche, **dadurch gekennzeichnet, dass** bei aktiviertem "Ruckmodus" die automatisierte Kupplung derart angesteuert wird, dass das Kupplungsmoment auf einen fest vorgegebenen Wert oder auf einen Wert, welcher von der Fahrzeugmasse und/oder von der Fahrbahn- bzw. Untergrundneigung abhängig ist, erhöht wird.

8. Kupplungssteuerungsverfahren nach wenigstens einem der vorangegangenen Ansprüche, **dadurch gekennzeichnet, dass** bei aktiviertem "Ruckmodus" unmittelbar nach dem Erhöhen des Kupplungsmoments eine Betriebsbremse des Kraftfahrzeugs aktiviert wird, wodurch die im "Ruckmodus" zurückgelegte Fahrstrecke minimal gehalten wird.

9. Kupplungssteuerungsverfahren nach wenigstens einem der vorangegangenen Ansprüche, **dadurch gekennzeichnet, dass** die automatisierte Kupplung bei aktiviertem "Ruckmodus" derart angesteuert werden kann, dass lediglich eine Ruckbewegung des Kraftfahrzeugs erzwungen wird oder dass mehrere Ruckbewegungen des Kraftfahrzeugs erzwungen werden.
